(19) **Europäisches Patentamt / European Patent Office / Office européen des brevets**

(11) **EP 3 293 208 B1**

## (12) EUROPEAN PATENT SPECIFICATION

(45) Date of publication and mention
of the grant of the patent:
**16.06.2021 Bulletin 2021/24**

(51) Int Cl.:
**C08F 2/00** (2006.01)          **C08L 23/06** (2006.01)
**C08L 23/08** (2006.01)

(21) Application number: **16188324.4**

(22) Date of filing: **12.09.2016**

(54) **BIMODAL POLYETHYLENE COMPOSITION AND PIPE COMPRISING THE SAME**

BIMODALE POLYETHYLENZUSAMMENSETZUNG UND ROHR DAMIT

COMPOSITION DE POLYÉTHYLÈNE BIMODAL ET TUYAU LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.03.2018 Bulletin 2018/11**

(73) Proprietors:
• **Thai Polyethylene Co., Ltd.**
  **10800 Bangkok (TH)**
• **SCG Chemicals Co., Ltd.**
  **Bangkok 10800 (TH)**

(72) Inventors:
• **NATTHAPORN, Suchao-in**
  **10800 Bangkok (TH)**
• **WARACHAD, Klomkamol**
  **10800 Bangkok (TH)**

(74) Representative: **Scholz, Volker**
**Boehmert & Boehmert**
**Anwaltspartnerschaft mbB**
**Pettenkoferstrasse 22**
**80336 München (DE)**

(56) References cited:
**EP-A1- 2 740 761          WO-A1-94/28064**
**WO-A1-2010/008964**

• **Finathene® polyethylene XSene bimodal ethylene-hexene copolymers, The latest technology advance, Fina Chemicals, 10/98 XP055439706**
• **Environmental Stress Crack Performance by Ineos XP055625988**

**Description**

The present invention relates to bimodal polyethylene composition and a pipe comprising the same.

Bimodal high density polyethylene (HDPE) for pipe comprises of the homopolymer and the copolymer of ethylene and comonomers with the balance in the specific portion to achieve both pressure and slow crack growth (SCG) resistance. The basis for the classification of pipe follows ISO9080 to determine long term hydrostatic strength using lower prediction limit (LPL). The 50 years LPL value at 20°C must be above the minimum required strength (MRS) of 10 MPa for a PE 100 and 11.2 MPa for PE112.

The comonomers are always used to create and control the formation of short branches along the linear polyethylene chain that tend to obstruct crystallization. For example, the common $\alpha$-olefin comonomers, 1-butene, 1-hexene and 1-octene can introduced ethyl, butyl and hexyl branches, respectively. It is well known in the art that the longer of short chain branch, the higher SCG resistance with the same amount concentration. A higher comonomer incorporation leads to more tie molecules and the efficiency of the entanglements. Furthermore, the branches contained in the chains inhibit the ability of the tie molecules to slip past one another.

JP 2012-67914 A discloses a polymer pipe. The pipe is formed from a polymer composition, more specifically a polyethylene composition, composed of 1 to 8 wt% of carbon and a bimodal polyethylene polymer.

WO 01/79345 A1 discloses pipes produced by using a bimodal polyethylene composition which have a design stress of at least 9.0 MPa.

CA 2 483 835 A1 is related a polyethylene resin comprising 44 to 55 wt% of a high molecular weight polyethylene fraction and 45 to 56 wt% of a low molecular weight polyethylene fraction. The authors propose the use of the polyethylene composition for manufacturing pipes.

Although numerous pipe compositions are known and used, there is still a need for improved durable materials, especially for transmission and distribution pipe service for gases and water. It is desired that the materials should exhibit improved durability and/or long term resistance.

With respect to the polymer properties, the higher the density of the polyethylene, the higher will be the long term hydrostatic strength. In order to improve the stress cracking resistance of a polyethylene pipes, the increasing of molecular weight or decreasing density using comonomer should be focused. When the density is decreased, the rigidity of the polyethylene is unfavorably deteriorated. It is important to noted that 1-butene is most preferable comonomer due to the low cost among C4 to C10 $\alpha$-olefin comonomers. As mentioned above, the length of short chain brach has highly effect to polymer properties, especially SCG.

In other words, it is the object of the present invention to provide bimodal polyethylene compositions overcoming drawbacks of the prior art, in particular compositions which may be used for manufacturing pipes and which are suitable to improve pressure resistance and slow crack growths (SCG) thereof by using 1-butene comonomer

In particular, it is the finding of present invention that by selecting a particular polymer design it is possible to obtain resins having excellent stress crack resistance with other properties conform to PE112 with excellent in SCG resistance for more than 3500 h. This object is achieved by a bimodal polyethylene composition comprising a low molecular weight polyethylene homopolymer fraction and high molecular weight polyethylene copolymer fraction, where the high molecular weight polyethylene fraction has a $C_4$ to $C_{10}$ $\alpha$-olefin comonomer content of 0.25 to 3 %mol, wherein the content of the low molecular weight polyethylene with respect to the total amount of the bimodal polyethylene composition is from 40-65 wt.%; and the bimodal polyethylene composition has a $MWD_{2/1}$ of more than 0.7 and a $Mw_{2/1}$ of more than 15.

A bimodal polymer in this regard is a polymeric material which, in principle, consists of two intimately mixed polymers (i.e. a first polymer fraction mixed with a second polymer fraction) having a different molecular weight, in particular having a different weight average molecular weight.

The term low molecular weight polyethylene refers to polyethylene, preferably a polyethylene homopolymer, having a weight average molecular weight (Mw) from 25.000 to 60.000 g/mol.

The term high molecular weight polyethylene refers to a polyethylene (or polyethylene copolymer) having a weight average molecular weight form 200.000 to 1.200.000 g/mol.

A homopolymer is a polymer merely consisting of one type of monomer units. Likewise, a copolymer is a polymer which is formed from more than one comonomer units. The inventive polyethylene copolymer is formed by mixing ethylene monomers with 0.25 to 3 %mol of another $\alpha$-olefin.

The weight average molecular weight of the bimodal polyethylene composition (or the respective constituents thereof) is determined using gel permeation chromatography (GPC). For this purpose, around 8 mg of sample were dissolved in 80 ml of 1, 2, 4-trichlorobenzene at 160°C for 90 min. Then, the sample solution, 200 $\mu$l, was injected into a high temperature GPC with IR5, an infrared detector (Polymer Char, Spain) with a flow rate of 0.5 ml/min at 145°C in column zone and 160°C in detector zone. The data achieved this way were processed by GPC One® Software Polymer Char Spain.

In a preferred embodiment, the bimodal polyethylene composition has a density of 0.945 to 0.965 g/cm$^3$ and

a MFR$_5$ from 0.10 to 0.50 g/10 min.

The density of the polyethylene composition (or the constituents thereof) was measured by observing the level to which a pellet sinks in a liquid column gradient tube, in comparison with a standard of known density. This method is determination of the solid plastic after annealing at 120°C following ISO 1183.

The melt flow rate (MFR$_5$) was determined according to ISO 1133 and is indicated in g/10 min and describes the flowability of a polymer under testing conditions at 190°C with a load of 5kg.

It may be further preferred that the bimodal polyethylene composition comprises 50 to 60 %wt of the low molecular weight polyethylene homopolymer fraction and 40 to 50 %wt of the high molecular weight polyethylene copolymer fraction.

It is further preferred that the α-olefin comonomer is selected from 1-butene, 1-hexene, 1-octene, 1-decene or mixtures thereof, preferably 1-butene.

Finally, the object is achieved by a pipe comprising the inventive bimodal polyethylene composition.

In this regard it is preferred that the pipe is substantially comprising the bimodal polyethylene composition, which means that the pipe does, besides the inventive bimodal polyethylene composition, merely comprises constituents of the type and in the amount not significantly affecting the properties of the pipe, in particular with respect to pressure resistance and slow crack growths. It is particularly preferred that the inventive pipe consists of the bimodal polyethylene composition.

In preferred embodiments of the invention, namely with respect to the inventive bimodal polyethylene composition as well as with respect to the inventive pipe prepared therefrom, "comprising" is "consisting of".

The above embodiments mentioned to be preferred result in even more improved properties with respect to high pressure resistance and in more improved slow crack growths.

In terms of the invention, a pipe is a tubular section or hollow cylinder, usually but not necessarily of circular cross-section, used mainly to convey substances which can flow - liquids and gases (fluids), slurries, powders and masses of small solids - from one place to another place.

It was surprisingly found by the inventors that the inventive bimodal polyethylene composition allows to prepare pipes having improved mechanical properties. The balance of pressure resistance and long term stress cracking resistance was achieve to obtain PE112 with minimum required strength, MRS, more than 11.2 MPa at 50 years at 20°C with excellence in slow crack growth (SCG).

In order to improve the environmental stress cracking resistance of a polyethylene composition, it is known to increase the molecular weight or to decrease the density of the polyethylene. However, when the molecular weight is increased, the fluidity of the polyethylene is lowered, so that the molding properties such as pipe-extrusion properties and injection moldability are impaired. When the density is decreased, the rigidity of the polyethylene is unfavorably lowered.

These counteracting factors make it very challenging to develop polyethylene for the manufacture of pipes with the necessary balance of properties, e.g. improved pressure resistance without detrimentally affecting SCG.

In the following, the invention will be described in greater detail by referring to specific examples in which embodiments in accordance with the invention are shown and compared with that of the prior art (comparative examples).

Definitions and measurement methods

a) Density

Density is measured according to ISO 1183 and showed in g/cm$^3$ unit.

b) Melt flow rate

The melt flow rate (MFR) is determined according to ISO1133 at 190°C and is indicated in g/10 min. The load under the melt flow rate is determined and indicated as a subscript, for instance MFR$_2$ is measured under 2.16 kg load, MFR$_5$ is measured under 5 kg load.

c) Comonomer content

Quantitative $^{13}$C-NMR was used to determine the comonomer content in polyethylene copolymer. The characteristic signals corresponding to the incorporation of Butene-1 and/or Hexene-1 were identified and calculated to obtain the amount of comonomer in the polymer.

d) Crystallinity

The crystallinity is frequently used for characterization by Differential Scanning Calorimetry (DSC) follow ASTM D 3418. Samples were identified by peak temperature and enthalpy, as well as the % crystallinity was calculated from the peak area.

e) Gel Permeation Chromatography (GPC)

Around 8 mg of sample was dissolved in 8 ml of 1,2,4-trichlorobenzene at 160°C for 90 min. Then the sample solution, 200 $\mu$l, was injected into the high temperature GPC with IR5, an infared detector (Polymer Char, Spain) with flow rate of 0.5 ml/min at 145°C in column zone and 160°C in detector zone. The data was processed by GPC One® software, Polymer Char, Spain.

f) Molecular weight and Molecular weight distribution (MWD)

The weight average molecular weight (Mw), the number average molecular weight (Mn) and the Z average molecular weight ($M_Z$) in g/mol were analysed by gel permeation chromatography (GPC). Molecular weight distribution was calculated by Mw/Mn.

g) MWD and Mw ratio

The molecular weight distribution (MWD) ratio determined by Conventional Gel permeation chromatography. A bimodal MWD can be deconvoluted into two components: homopolymer and copolymer part by using 2 modes of Gaussian function. Molecular weight distribution is calculated from ratio of Weight average (Mw) and number average (Mn) of each Gaussian component. The ratio of MWD ($MWD_{2/1}$) and Mw ($Mw_{2/1}$) is obtained by using following formula.

$$MWD_{(2/1)} = MWD_{copo} / MWD_{homo}$$

$$Mw_{2/1} = Mw_{copo} / Mw_{homo}$$

h) Stress at yield:

The tensile testing was performed by elongating a specimen and measured the load carrier following the specimen dimension using Universal testing machine. A variety of tensile properties can be extracted from the stress-strain curve. The tensile stress at the yield is the point with an increase in strain does not result in an increase in stress.

i) Eta747

The viscosity at shear stress 747 Pa was performed on DHR-3 controlled stress rotational rheometer from TA instrument. Using parallel plate geometry of 25mm and measurement Gap 1.8 mm. The sample was melt in Compression molding at 190°C for 5 minutes. The creep stress 747 Pa was applied to sample under nitrogen at 190°C. The strain deformation ($\gamma$) was monitored in the function of time. Eta747 was calculated from strain deformation at equilibrium creep time.

j) Charpy impact strength

Charpy impact strength is determined according to ISO179 at 23°C, 0°C and -30°C and showed in the unit kJ/m$^2$

k) Pressure resistance

Pressure resistance was evaluated on 32 mm SDR 11 pipes produced by CINCINNATI extruders according to ISO 1167. The time to failure is determined in hours.

1) Estimated LPL

Lifetime of pipe at 50 years was estimated following ISO 9080 at temperature 20°C, 60°C and 80°C. The lower prediction limit (LPL) of pipe observed the stress level at estimated 50 years.

## Examples

The comparative (Comp.) examples 1-3 are commercially available PE100 grade in the market. Those samples can be used to compare the polymer in terms of pipe application with our invention.

In order to produce Comp. 4 and Inv.1 bimodal PE resin, the polymerization process and procedure is typically the same as that of CX slurry process. Also, Ziegler-Natta catalyst is used. The comonomer type was applied by 1-butene. However, the operating conditions have to optimize with polymer design.

The polymerization catalysts include coordination catalysts of a transition metal called Ziegler-Natta (ZN). A commercial available Ziegler-Natta catalyst was used. Bimodal polyethylene resins, hereinafter base resin, produced in accordance with two-stage cascade slurry polymerization process and having composition ratios of a) low molecular weight (LMW) HDPE having $MFR_2$ in the range of 100 to 700 g/10 min, and density $\geq 0.970$ g/cm$^3$ and b) high molecular weight (HMW) HDPE having $MFR_5$ 0.20-0.40 g/10 min and density 0.940-0.960 g/cm$^3$. The LMW HDPE resin is a homopolymer polymerized in the first reactor in the absence of comonomer. The HMW PE resin produced in the second reactor is copolymer containing 1-butene content of 0.25 - 3.0 %mol. The bimodal resin comprises 50 to 60%wt. of the first polyethylene homopolymer fraction and 40 to 50%wt. of a second polyethylene copolymer fraction.

The obtaining bimodal PE product from the second reactor was dried and the resulting powder sent to a finishing operation where it was compounded with carbon black 2-2.5 wt% in extruder at 210°C under nitrogen atmosphere with 2000 ppm Ca/Zn stearate and 3000 ppm hindered phenol/phosphate stabilizers and, then, pelletized. Density and MFR were obtained using the pelletized resins.

Plastic pipe is produced by extruding molten polymer through an annular die. The pipe is formed by passing the molten extrudate through a sizing sleeve and then to a cooling tank where water is sprayed on the outer surface. Solidification proceeds from the outer surface radially inward.

Polymerization conditions and polymer properties are shown in Table 1-2, respectively. Testing results and analysis were applied and recorded on the compound.

Table 1. Polymerization conditions of Comparative example and Inventive example.

| Property | Unit | Sample | |
|---|---|---|---|
| | | Comp. 4 | Inv. 1 |
| Homopolymer | | | |
| Split ratio | % | 51-53 | 53-56 |
| Temperature | °C | 81-85 | 81-85 |
| Pressure | Bar | 7.0-8.0 | 7.0-8.0 |
| Hexane flow rate | L/h | 32.5 | 30 |
| Ethylene flow rate | L/h | 1436 | 1352 |
| Hydrogen flow rate | NL/h | 193 | 180 |
| Catalyst flow rate | g/h | 1.79 | 1.6 |
| Copolymer black compound | | | |
| Split ratio | % | 46-50 | 43-47 |
| Temperature | °C | 70-75 | 70-75 |
| Pressure | Bar | 1.5-3.0 | 1.5-3.0 |
| Hexane flow rate | L/h | 714 | 714 |
| Ethylene flow rate | L/h | 2640 | 2332 |
| Hydrogen flow rate | NL/h | 2 | 1.5 |
| Comonomer | K g/h | 0.54 | 0.5 |
| Comonomer type | | Bu-1 | Bu-1 |

Comparative examples (Comp.) 1-4 are compositions known in the art for preparing pipes fulfilling PE100 conditions and existing in the market by using bimodal and multimodal technology with Butene-1 comonomer. The Comp. 4 and Inv.1 bimodal PE resin were produced using different polymerizaton conditions. Inv. 1 shows good balance of pressure resistance and SCG. Inventive example 1 shows high pressure resistance at 20°C and MRS 11.2 that meet the requirement for PE112. This property is in accordance with the stress at yield. The excellent in sagging resistance observed by Eta 747 for Inv. 1. Moreover, the impact strength by charpy test at temperature 23,0 and -30°C are in the higher range from the effect of 1-butene incorporation. The $Mw_{2/1}$ of Inv. 1 is in the higher range represented the high molecular weight ratio part between HMW copolymer from 2nd reactor and homopolymer from 1st reactor. Also, the $MWD_{2/1}$ is the broadness in ratio comparison of HMW copolymer from 2nd reactor and homopolymer from 1st reactor. All the results indicated the distinguish features and advantages of the inventive ethylene copolymer compositions over the prior art.

Table 2. Polymer properties of Example 1, Example 2 and Comparative examples.

| Property | Unit | Sample | | | | |
|---|---|---|---|---|---|---|
| | | Comp.1 | Comp.2 | Comp. 3 | Comp.4 | Inv.1 |
| Homopolymer | | | | | | |
| $MFR_2$ | g/10 min | NA | NA | NA | 620 | 340 |
| Copolymer black compound | | | | | | |
| Density | g/cm³ | 0.96 | 0.96 | 0.96 | 0.96 | 0.96 |
| $MFR_5$ | g/10 min | 0.24 | 0.2 | 0.2 | 0.3 | 0.2 |
| 1-buene Content | %mol | 0.57 | 0.7 | 0.78 | 1.09 | 0.8 |
| Crystallinity | % | 61.74 | 59.84 | 58.97 | 55.81 | 61.88 |
| Mw | g/mol | 259026 | 266033 | 268002 | 240291 | 258769 |
| Mn | g/mol | 10299 | 11467 | 12710 | 11659 | 10981 |
| Mz | g/mol | 1664192 | 1567258 | 1653331 | 1468631 | 1628926 |
| Mw/Mn | - | 25.15 | 23.2 | 21.09 | 20.61 | 23.57 |
| Stress at yield | MPa | 22.7 | NA | 21.07 | 20.74 | 24.1 |
| Eta747 | Pa.s | 520 | 515 | 446 | 608 | 644 |
| Charpy (23°C) | kJ/m² | 24.5 | 29.1 | 23.2 | 22.3 | 25.8 |
| Charpy (0°C) | kJ/m² | 18.6 | 20.9 | NA | NA | 22.5 |
| Charpy (-30°C) | kJ/m² | 10.2 | 9.46 | NA | NA | 10.3 |
| Pressure resistance at 20°C, 12.4 Mpa | h | 827 | NA | 275 | 168 | 2148 |
| Notch pipe test | h | 1290 | NA | 581 | 798 | 3703 |
| Estimiated LPL at 50 years | MPa | 10.8 | NA | 10.6 | 10 | 11.2 |

Table 3. Molecular weight information by GPC of Comp. 1-4 and Inv.1.

| Sample | Modal | Property | | | | |
|---|---|---|---|---|---|---|
| | | Mw (g/mol) | Mn (g/mol) | MWD | $MWD_{2/1}$ | $Mw_{2/1}$ |
| Comp. 1 | Modal 1 | 55547 | 6246 | 8.9 | 0.417 | 12.08 |
| | Modal 2 | 671055 | 181053 | 3.7 | | |
| Comp. 2 | Modal 1 | 69115 | 6857 | 10.1 | 0.358 | 9.96 |
| | Modal 2 | 688300 | 190622 | 3.6 | | |
| Comp. 4 | Modal 1 | 54420 | 6988 | 7.8 | 0.607 | 12.01 |
| | Modal 2 | 653580 | 138365 | 4.7 | | |

(continued)

| Sample | Modal | Property | | | | |
|--------|-------|----------|----------|-----|--------------|------------|
| | | Mw (g/mol) | Mn (g/mol) | MWD | $MWD_{2/1}$ | $Mw_{2/1}$ |
| Inv.1 | Modal 1 | 33509 | 5766 | 5.8 | | |
| | Modal 2 | 607173 | 121546 | 5.0 | 0.86 | 18.12 |
| | Modal 2 | 545765 | 91003 | 6 | | |

The features disclosed in the foregoing description and in the claims may, both separately and in any combination, be material for realizing the invention in diverse forms thereof.

**Claims**

1. A bimodal polyethylene composition comprising a low molecular weight polyethylene homopolymer fraction having a weight average molecular weight (Mw) from 25,000 to 60,000 g/mol and a high molecular weight polyethylene copolymer fraction having a weight average molecular weight from 200,000 to 1,200,000 g/mol, wherein the high molecular weight polyethylene copolymer fraction has a $C_4$ to $C_{10}$ $\alpha$-olefin comonomer content from 0.25 to 3 mol%, wherein
the content of the low molecular weight polyethylene with respect to the total amount of the bimodal polyethylene composition is from 40-65 wt%; and the bimodal polyethylene composition has a ratio of molecular weight distribution $MWD_{2/1}$ of more than 0.7, wherein

$$MWD_{(2/1)} = MWD_{copo} / MWD_{homo}$$

with $MWD_{copo}$ being the molecular weight distribution of the high molecular weight polyethylene copolymer fraction and $MWD_{homo}$ being the molecular weight distribution of the low molecular weight polyethylene homopolymer fraction and
a $Mw_{2/1}$ of more than 15, wherein

$$Mw_{2/1} = Mw_{copo} / Mw_{homo}$$

wherein $Mw_{copo}$ is the weight average molecular weight of the high molecular weight polyethylene copolymer fraction and $Mw_{homo}$ is the weight average molecular weight of the low molecular weight polyethylene homopolymer fraction.

2. The bimodal polyethylene composition according to claim 1, wherein the bimodal polyethylene composition has a density of 0.945 to 0.965 g/cm³ and a $MFR_5$ from 0.10 to 0.50 g/10 min.

3. The bimodal polyethylene composition according to claim 1 or 2, wherein the bimodal polyethylene composition comprises 50 to 60 wt.% of the low molecular weight polyethylene homopolymer fraction and 40 to 50 wt.% of the high molecular weight polyethylene copolymer fraction.

4. The bimodal polyethylene composition according to any of the preceding claims, wherein the $C_4$ to $C_{10}$ $\alpha$-olefin comonomer is selected from 1-butene, 1-hexene, 1-octene, 1-decene or mixtures thereof, preferably 1-butene.

5. Pipe comprising the bimodal polyethylene composition according to any of the preceding claims.

**Patentansprüche**

1. Bimodale Polyethylenzusammensetzung, umfassend eine Polyethylenhomopolymerfraktion mit niedrigem Molekulargewicht mit einem Gewichtsmittel des Molekulargewichts (Mw) von 25.000 bis 60.000 g/mol und eine Polyethylencopolymerfraktion mit hohem Molekulargewicht mit einem Gewichtsmittel des Molekulargewichts von 200.000 bis 1.200.000 g/mol, wobei die Polyethylencopolymerfraktion mit hohem Molekulargewicht einen C4 bis $C_{10}$ $\alpha$-

Olefincomonomergehalt von 0,25 bis 3 Mol-% aufweist, wobei
der Gehalt des Polyethylens mit niedrigem Molekulargewicht in Bezug auf die Gesamtmenge der bimodalen Polyethylenzusammensetzung von 40-65 Gew.-% beträgt; und die bimodale Polyethylenzusammensetzung ein Verhältnis der Molekulargewichtsverteilung $MWD_{2/1}$ von mehr als 0,7 aufweist, wobei

$$MWD_{(2/1)} = MWD_{copo}/ MWD_{homo}$$

wobei $MWD_{copo}$ die Molekulargewichtsverteilung der Polyethylencopolymerfraktion mit hohem Molekulargewicht ist und $MWD_{homo}$ die Molekulargewichtsverteilung der Polyethylenhomopolymerfraktion mit niedrigem ist und a $Mw_{2/1}$ von mehr als 15, wobei

$$Mw_{2/1} = Mw_{copo} / Mw_{homo}$$

wobei $Mw_{copo}$ das Gewichtsmittel des Molekulargewichts der Polyethylen-Copolymerfraktion mit hohem Molekulargewicht ist und $Mw_{homo}$ das Gewichtsmittel des Molekulargewichts der Polyethylen-Homopolymerfraktion mit niedrigem Molekulargewicht ist.

2. Bimodale Polyethylen-Zusammensetzung nach Anspruch 1, wobei die bimodale Polyethylen-Zusammensetzung eine Dichte von 0,945 bis 0,965 $g/cm^3$ und ein $MFR_5$ von 0,10 bis 0,50 g/10 min aufweist.

3. Bimodale Polyethylen-Zusammensetzung nach Anspruch 1 oder 2, wobei die bimodale Polyethylen-Zusammensetzung 50 bis 60 Gew.-% der Polyethylen-Homopolymerfraktion mit niedrigem Molekulargewicht und 40 bis 50 Gew.-% der Polyethylen-Copolymerfraktion mit hohem Molekulargewicht umfasst.

4. Bimodale Polyethylen-Zusammensetzung nach einem der vorhergehenden Ansprüche, wobei das $C_4$ bis $C_{10}$ $\alpha$-Olefin-Comonomer ausgewählt ist aus 1-Buten, 1-Hexen, 1-Octen, 1-Decen oder Mischungen davon, vorzugsweise 1-Buten.

5. Rohr, umfassend die bimodale Polyethylen-Zusammensetzung nach einem der vorhergehenden Ansprüche.

**Revendications**

1. Composition de polyéthylène bimodal comprenant une fraction homopolymère d'un polyéthylène de masse moléculaire basse ayant une masse moléculaire moyenne en poids (MW) qui va de 25 000 à 60 000 g/mol et une fraction copolymère d'un polyéthylène de masse moléculaire élevée ayant une masse moléculaire moyenne en poids qui va de 200 000 à 1 200 000 g/mol, où la fraction copolymère du polyéthylène de masse moléculaire élevée a une teneur en comonomères $\alpha$-oléfiniques en $C_4$ à $C_{10}$ qui va de 0,25 à 3 % en moles, où la teneur en polyéthylène de masse moléculaire basse rapportée à la quantité totale de la composition de polyéthylène bimodal va de 40 à 65 % en poids ; et la composition de polyéthylène bimodal a un rapport des distributions des masses moléculaires $MWD_{2/1}$ supérieur à 0,7, où

$$MWD_{(2/1)} = MWD_{copo} / MWD_{homo}$$

où $MWD_{copo}$ est la distribution des masses moléculaires de la fraction copolymère du polyéthylène de masse moléculaire élevée et $MWD_{homo}$ est la distribution des masses moléculaires de la fraction homopolymère du polyéthylène de masse moléculaire basse et un $Mw_{2/1}$ supérieur à 15, où

$$MW_{2/1} = MW_{copo} / MW_{homo}$$

où $MW_{copo}$ est la masse moléculaire moyenne en poids de la fraction copolymère du polyéthylène de masse moléculaire élevée et $MW_{homo}$ est la masse moléculaire moyenne en poids de la fraction homopolymère du polyéthylène de masse moléculaire basse.

**EP 3 293 208 B1**

**2.** Composition de polyéthylène bimodal selon la revendication 1, où la composition de polyéthylène bimodal a une densité qui va de 0,945 à 0,965 g/cm$^3$ et un MFR$_5$ qui va de 0,10 à 0,50 g/10 min.

**3.** Composition de polyéthylène bimodal selon la revendication 1 ou 2, où la composition de polyéthylène bimodal comprend de 50 à 60 % en poids de la fraction homopolymère du polyéthylène de masse moléculaire basse et de 40 à 50 % en poids de la fraction copolymère du polyéthylène de masse moléculaire élevée.

**4.** Composition de polyéthylène bimodal selon l'une quelconque des revendications précédentes, où le comonomère $\alpha$-oléfinique en C$_4$ à C$_{10}$ est sélectionné parmi le 1-butène, le 1-hexène, le 1-octène, le 1-décène ou des mélanges de ceux-ci, préférablement le 1-butène.

**5.** Tuyau comprenant la composition de polyéthylène multimodal selon l'une quelconque des revendications précédentes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012067914 A
- WO 0179345 A1
- CA 2483835 A1